# EUROPEAN PATENT SPECIFICATION

(11) **EP 2 517 877 B1**
(45) Date of publication and mention of the grant of the patent: **23.09.2015**
(21) Application number: 12163373.9
(22) Date of filing: 05.04.2012
(51) Int. Cl.: B32B 17/10, C03C 3/083, C03C 17/00, C03C 27/10

(54) **Spandrel panel**
Fassadenverkleidungspaneel
Panneau-allège

(30) Priority: 08.04.2011 GB 201105946
(43) Date of publication of application: 31.10.2012
(73) Proprietor: Pilkington Deutschland AG, 45884 Gelsenkirchen (DE)
(72) Inventor: Troska, Christoph, 45699 Herten (DE); Nöthe, Axel, 44575 Castrop-Rauxel (DE); Paul, Thomas, 44625 Herne (DE)
(74) Representative: Stanley, Andrew Thomas

(56) References cited:
- EP-A1- 1 938 964
- WO-A1-2007/093828
- WO-A1-2009/061329
- WO-A2-2007/113259
- US-A- 4 863 540
- US-A1- 2003 064 198
- US-A1- 2005 042 459
- US-A1- 2006 065 350

## Description

The present invention relates to a spandrel panel for use in glazing the exterior of a building, in areas other than vision areas, and to a method of making a spandrel panel.

A glazing system such as a façade for a building comprises a number of windows offering the occupants of the building a view to the outside of the building. As such, the windows provide the façade with vision areas and typically have a high visible light transmission. In addition to windows, the glazing system may comprise one or more spandrel panel. A spandrel panel is used, for the most part, to conceal interior portions of a building that would not necessarily be aesthetically pleasing if viewed from the exterior of the building. Examples of such interior portions would be building frame members, heating and air conditioning ducts, tubing or plumbing, and electrical cables or conduits. In addition to concealing interior portions of the building, a spandrel panel will typically aesthetically complement or harmonise with the windows of the glazing system and other attributes of the building. If desired, a contrasting colour scheme may be chosen.

There are many different known designs of spandrel panel. A common spandrel panel comprises a toughened clear glass sheet with a coating such as paint or fused ceramic frit on a major surface thereof. Such spandrel panels are described in US4,302,503, US4,474,856 and US2007/0026241A1.

Another type of spandrel panel is described in US2004/0202803A1. This type of spandrel panel uses a pane having a composition that exhibits low light transmission. Other spandrels utilising coloured glass sheets are described in WO2006/087386A1.

Another type of spandrel panel is described in US4,863,540. This type of spandrel panel uses a polyurethane sheet which has been ultraviolet light stabilized and which is pigmented, coated or otherwise coloured. A coupling agent is employed and the polyurethane adheres directly to a glass sheet without glue or adhesives.

An alternative spandrel panel comprises a multilayer coating on glass, the coated glass having very low visible light transmission, typically less that 5% i.e. about 1%. Given that the coating is of the absorbing type, the visible light transmission of the coated glass is primarily determined by the coating and not the glass substrate. The coating also has high reflectivity to visible light. Such coated spandrel panels are described in EP0404282B1, EP0441011B1 and EP0504790B1. When such a spandrel panel is exposed to sunlight, the spandrel gets hot due to heat being transferred from the highly absorbing coating. Thermal stress can be induced in the spandrel panel when one part of the spandrel panel expands with heat, and another part resists expansion because the spandrel panel is cooler. The spandrel panel may be partly shaded from the sun, giving rise to non-uniform heating. When the stress generated in the glass is greater than the edge strength of the glass, a thermal fracture will occur.

Thermal breakage may occur in monolithic spandrel panels that have annealed glass sheets that absorb heat. To avoid the potential for thermal breakage, glass sheets used in monolithic spandrel panels are toughened.

Spandrels panels are known which utilise annealed glass and are offered for sale by Pilkington. Details of such spandrels can be found at www.pilkington.com. These annealed spandrels have an annealed outer sheet of glass fixed to an aluminium laminate via a coloured heat conducting plastic paint. The aluminium laminate is an effective heat absorber and is able to even out any temperature gradients developed in the glass. Such spandrel panels are also described in WO2005/085150A1.

WO2007/093828A1 discloses a laminated glazing comprising an inner ply and an outer ply having a generally opaque interlayer laminated therebetween.

There are certain applications where such a spandrel panel may not be used, in particular when the spandrel panel is used in a glazing façade comprising windows of coated glass having certain transmitted and reflected colours.

Accordingly the present invention provides from a first aspect a laminated spandrel panel comprising a first ply of glazing material and a second ply of glazing material, there being a ply of interlayer material in between the first ply of glazing material and the second ply of glazing material, wherein the spandrel panel comprises light transmission reducing means for providing the spandrel panel with suitably low visible light transmittance, the light transmission reducing means comprising a coating on a major surface of the first ply of glazing material, wherein the coating is a light absorbing multilayer coating comprising at least one metal layer and wherein the coating faces the ply of interlayer material, further wherein the first ply of glazing material is a sheet of annealed glass comprising between 0.001% and 0.09% by weight Fe₂O₃ and wherein the first ply of glazing material without the light transmission reducing means has lower heat absorption than an equivalent ply of clear float glass.

By using a first ply of glazing material that has a lower heat absorption than an equivalent ply of clear float glass, it has been found that the first ply of glazing material does not need to be toughened. However if desired the first ply of glazing material may be toughened. If the spandrel panel comprises a toughened ply it is not necessary for the spandrel to be laminated.

The light transmission reducing means provide the spandrel panel with a low visible light transmittance such that the spandrel panel is useful for applications wherein vision through the panel is not a requirement.

In the field of glass in building, thermally toughened soda-lime-silicate safety glass is defined in BS EN 12150-1 (2000). Section 3.1 of this standard defines thermally toughened soda lime silicate safety glass as "glass within which a permanent surface compressive stress has been induced by a controlled heating and cooling process in order to give it greatly increased resistance to mechanical and thermal stress and prescribed fragmentation characteristics

Glass may be semi-toughened or heat strengthened. Such glass for use in building is defined according to BS EN 1863-1 (2000). Heat strengthened glass is not toughened glass as defined in BS EN 12510-1 (2000) but has undergone some form of heat treatment.

Soda lime silicate glass for use in building may also be termed "heat soaked thermally toughened soda lime silicate glass" and is defined in accordance with EN 14179-1 (2005). In section 3.1 of this standard, heat soaked thermally toughened soda lime silicate safety glass is defined as glass within which a permanent surface compressive stress has been induced in order to give it greatly increased resistance to mechanical and thermal stress and prescribed fragmentation characteristics and which has a known level of residual risk of spontaneous breakage due to the presence of critical nickel sulphide (NiS) inclusions.

Laminated glass and laminated safety glass in building is defined in accordance with BS EN ISO 12543-1 (1998). In section 3.8 of this standard, laminated safety glass is defined as laminated glass where in the case of breakage the interlayer serves to retain the glass fragments, limits the size of opening, offers residual resistance and reduces the risk of cutting or piercing injuries.

By clear float glass, it is meant a glass having a composition as defined in BS EN 572-1 and BS EN 572-2 (2004).

By an equivalent ply, it is meant the first ply of glazing material has the same dimensions as the ply of clear float glass. Also, the clear float glass ply does not have a coating on a major surface thereof, that is, the clear float glass ply is an uncoated ply.

Preferably the light transmission reducing means comprises a coating on a major surface of the first ply of glazing material. The coating may be a paint or ceramic frit. The coating may be in the form of a pattern, or cover only portions of the major surface, although it is preferred that the coating covers the major surface such that the spandrel panel is of suitably low visible light transmittance at all points in the installed position. The coating may cover the entire major surface, although the coating may not extend fully to the edges of the major surface.

Preferably the coating is a light absorbing multilayer coating comprising at least one metal layer. Suitable coatings are described in EP0404282B1, EP0441011B1 and EP0504790B1 and may be deposited under vacuum using magnetron cathode sputtering. Preferably the coating faces the ply of interlayer material. Preferably the coating is in direct contact with the ply of interlayer material. When the coating faces the ply of interlayer material or is in direct contact with the ply of interlayer material, the coating is protected from damage.

Preferably the light transmission reducing means consists of a light absorbing coating on a major surface of the first ply of glazing material.

When the spandrel panel is installed in a façade of a building or the like, preferably the first ply of glazing material faces the outside of the building and the second ply of glazing material faces the interior of the building. For the avoidance of doubt, this means that the optical path of a ray of light from the sun passes through the first ply of glazing material before the second ply of glazing material.

Preferably the first and/or second pane of glazing material has a coating on an exposed surface.

Preferably the first ply of glazing material is a sheet of annealed glass, more preferably a sheet of annealed soda-lime-silicate glass. This is advantageous because the first ply of glazing material needs no pre-processing, such as thermally toughening, prior to being used in the spandrel panel.

For clear float glass, the Fe₂O₃ level by weight is typically 0.11%. Float glass with an Fe₂O₃ content less than this level is typically referred to as low iron float glass. Such glass usually has the same basic composition of the other component oxides i.e. low iron float glass is also a soda-lime-silicate glass, as is clear float glass.

A low iron float glass is usually made by using low iron containing raw materials. Typically low iron containing float glass contains between 0.001 and 0.07% by weight Fe₂O3.

When Fe₂O₃ is present in a glass, it can exist in two oxidation states, namely ferrous iron (Fe²⁺) and ferric iron (Fe³⁺). The total iron oxide Fe₂O₃ content of a glass is usually quoted in terms of Fe₂O₃ only, and the ratio of ferrous iron to ferric iron is quoted as a percentage of the total Fe₂O₃.

It is possible to determine ferrous iron by chemical techniques, although for low iron containing glass, the level of ferrous iron is low making other techniques more suitable. One such technique is to measure the absorption of the glass at 1000nm, as this is in the region of the peak absorption due to ferrous iron. It is then possible to determine the ferrous iron content using the well known Lambert-beer law and an appropriate extinction coefficient for ferrous iron. A method of optically determining the amount of ratio of ferrous iron to ferric iron in glass is described by C.R. Bamford in "Colour Control and Generation in Glass", Elsevier (1977).

An important parameter in determining the temperature rise may be the solar direct transmittance of the glass, which for a soda-lime silicate glass containing only Fe₂O₃ as an impurity (or colourant) is largely determined by the ferrous content of the glass. It is possible to have higher levels of Fe₂O₃ in the glass, providing the ferrous level of the glass is reduced. The direct solar transmittance is calculated according to BS EN410 (1998). Other calculation methods exist for determining the transmission properties of a transparent material to the sun, such as ISO9050. Such methods provide a standard method for calculating the amount of sunlight that is transmitted through a transparent material such as clear float glass.

By reducing the amount of Fe₂O₃ in the glass, the glass does not heat up as much with the result that it is less likely for temperature gradients to exist in the glass that would give rise to thermal breakage. Reducing the amount of Fe₂O₃ in the glass provides one way of reducing the amount of ferrous iron in the glass. Another way is to maintain the same Fe₂O₃ content and to reduce to percentage of ferrous iron in the glass by using oxidising melting conditions when the glass is produced.

When the first ply of glazing material is a sheet of annealed glass, preferably a sheet of annealed soda-lime-silicate glass, preferably the sheet of annealed glass comprises less than 0.015% by weight ferrous iron calculated as Fe₂O₃, more preferably between 0.0001% and 0.01% by weight of ferrous iron calculated as Fe₂O₃, even more preferably between 0.0002% and 0.005% by weight of ferrous iron calculated as Fe₂O₃.

When the first ply of glazing material is a sheet of annealed glass, preferably a sheet of annealed soda-lime-silicate glass, preferably the sheet of annealed glass comprises between 0.001% and 0.09% by weight Fe₂O₃, more preferably between 0.005% and 0.05% by weight Fe₂O₃. Preferably the percentage of Fe₂O₃ in the form of ferrous iron expressed as Fe₂O₃ is between 1 and 18%, preferably between 5 and 10%. The ability of the glass sheet to absorb heat is primarily determined by the amount of ferrous iron in the glass. For the avoidance of doubt, if the Fe₂O₃ content is 0.07% by weight and the percentage of ferrous iron expressed as Fe₂O₃ is 10% of the Fe₂O₃ content, the content of ferrous iron expressed as Fe₂O₃ is (0.07 × ¹⁰/₁₀₀ =) 0.007% by weight.

When the first ply of glazing material is a sheet of annealed glass, preferably the glass does not contain any other components that reduce the direct solar heat transmission of the glass sheet. In practice it is difficult to fully eliminate colouring components from the glass as they may be introduced with the raw materials or due to the melting process i.e. from dissolution of furnace refractory material. Preferably the glass comprises less than 20ppm NiO, more preferably less than 10ppm NiO, even more preferably between 0 and 10ppm NiO. Preferably the glass comprises less than 20ppm Co₃O₄, more preferably less than 10ppm Co₃O₄, even more preferably between 0 and 10ppm Co₃O₄. Preferably the glass comprises less than 20ppm Cr₂O₃, more preferably less than 10ppm Cr₂O₃, even more preferably between 0 and 10ppm Cr₂O₃. Preferably the glass comprises less than 20ppm Se, more preferably less than 10ppm Se, even more preferably between 0 and 10ppm Se. Typically the main colouring component in the glass that is introduced with the raw materials the glass is made from is Fe₂O₃. Usually other colouring components are deliberately added to the glass to modify the optical properties thereof.

Preferably the second ply of glazing material is a sheet of annealed glass, more preferably a sheet of annealed soda-lime-silicate glass.

Preferably the second ply of glazing material is a sheet of plastic material.

Preferably the second ply of glazing material has a lower optical quality then the first ply of glazing material. This is particularly desirable when the light transmission reducing means is a coating on the first ply of glazing material and the first ply of glazing material faces the outside of a building in which it is installed because the second ply of glazing material is not viewable by eye from the outside of the building.

Preferably the first ply of glazing material without the light transmission reducing means has a higher visible light transmittance than the second ply of glazing material without the light transmission reducing means.

The heat absorption of a ply of clear float glass may be defined in terms of the solar direct transmittance of the ply calculated according to BS EN410. Likewise, the heat absorption of a ply of glazing material may be calculated according to BS EN410. If the ply of glazing material has a low solar direct transmittance, such as 10%, the ply of glazing material has high heat absorption. If the ply of glazing material has a high solar direct transmittance, such as 90%, the ply of glazing material has low heat absorption. For a 6mm ply of clear float glass containing about 0.11% by weight Fe₂O₃ at a ferrous content expressed as Fe₂O₃ of 20%, the solar direct transmittance calculated according to BS EN410 is about 79%.

Preferably the first ply of glazing material without the light transmission reducing means has a solar direct transmittance calculated according to BS EN410 greater than 80%, preferably greater than 85%, more preferably 85% to 91%.

Preferably the solar direct transmittance calculated according to BS EN410 of an uncoated 6mm ply of the first ply of glazing material is greater than 85%, more preferably 85-91%. By an uncoated ply, it is meant both major surfaces of the first ply of glazing material are free of a coating that would reduce the visible light transmittance of the first ply of glazing material.

Preferably the first ply of glazing material without the light transmission reducing means is a ply of glazing material without a coating on either major surface thereof.

Preferably the laminated spandrel panel has a visible light transmission of less than 5%, preferably between 0% and 3%. The spandrel may be optically opaque, or have a visible light transmission between 0 and 1%.

Preferably the interlayer is PVB, although other interlayer materials may be useful, such as EVA, polyurethane or ionomer materials. If it is desired to give the spandrel panel fire protection properties, the interlayer may be a fire resistant interlayer based on sodium silicate or other suitable fire resistant material. Preferably the interlayer is laminated without the need to use an additional coupling agent between the interlayer and the surface the interlayer is bonded to. The ply of interlayer material may be suitably tinted or have a coating thereon, such that the ply of interlayer provides light transmission reducing means.

Preferably the first and/or second ply of glazing material has a thickness between 1mm and 25mm, more preferably between 4mm and 10mm.

Additional functionality may be provided by applying coatings to the exposed faces of the assembled spandrel panel, for example self cleaning or water repellent coatings.

When the first ply of glazing material has high light transmission, and the first ply of glazing material is configured to be the outer facing ply when installed in a façade in a building, there may be a functional element laminated between the two plies, such as a photovoltaic cell or light emitting diode device. This may be provided in a cut out in the ply of interlayer material and there may be a window in the light transmission reducing means for light to pass through the first ply of glazing material to the functional element. Preferably the laminated spandrel does not include a photovoltaic cell located in between the first ply of glazing material and the second ply of glazing material. Preferably the laminated spandrel does not include a light emitting diode located in between the first ply of glazing material and the second ply of glazing material.

The invention also provides from a second aspect a spandrel panel comprising a sheet of toughened soda-lime-silicate glass with light transmission reducing means to provide the spandrel panel with suitably low visible light transmission, wherein the soda-lime-silicate glass comprises less than 0.1% by weight Fe₂O₃, preferably 0.001% to 0.07% by weight Fe₂O₃, more preferably 0.005% to 0.05% by weight Fe₂O₃.

Preferably the ply of toughened soda-lime-silicate glass has a coating on a major surface thereof. Preferably the coating is a light absorbing multilayer coating comprising at least one metal layer. Preferably the light transmission reducing means consists of a light absorbing coating on a major surface of the sheet of toughened soda-lime silicate glass.

Preferably the spandrel panel according to the second aspect of the present invention has a visible light transmittance calculated using BS EN410 of less than 5%, more preferably between 0 and 3%.

Preferably in use, an uncoated surface of the ply of glazing material faces the outside of the building in which it is installed.

For a spandrel panel in accordance with the first or second aspects of the present invention, when the first ply of glazing material is a sheet of soda-lime-silicate glass, the glass itself may comprise other components in addition to iron oxide that absorb electromagnetic radiation in the 300-2600nm range. Such components are cobalt oxide, selenium, nickel oxide and chromium oxide. The level of these components should be such that they do not provide the soda-lime-silicate glass with the ability to absorb heat more than an equivalent clear soda-lime-silicate glass. These other components may be added at low levels, typically less than 50ppm, to impart a slightly different transmitted colour to the soda-lime-silicate glass.

The present invention also provides from a third aspect a façade for a building comprising at least one spandrel panel according to the first aspect or second aspect of the present invention.

From a fourth aspect, the present invention provides a method of producing a spandrel panel comprising the steps
(a) providing a first ply of glazing material that has lower heat absorption than an equivalent clear glass ply;
(b) coating a surface of the first ply of glazing material such that the coated ply has a sufficiently low visible light transmittance to be useful in spandrel applications;
(c) laminating the coated first ply of glazing material to a second ply of glazing material with a ply of interlayer material.

Preferably the first ply of glazing material is a sheet of annealed soda-lime-silicate glass.

Preferably the solar direct transmittance calculated according to B S EN410 of a 6mm ply of the first ply of glazing material is greater than 80%, preferably greater than 85%, more preferably 85% to 91%.

Preferably the first ply of glazing material is an annealed sheet of soda-lime-silicate glass that comprises between 0.001 and 0.09% by weight Fe₂O₃, preferably between 0.005 and 0.05% by weight Fe₂O₃.

Preferably the second ply of glazing material is a sheet of annealed soda-lime-silicate glass.

Preferably the coating faces the ply of interlayer material.

Preferably the coating is in direct contact with the interlayer.

Preferably the second ply of glazing material is body tinted.

Preferably the second ply of glazing material is provided with a coating on an exposed surface thereof.

Preferably the spandrel panel has a visible light transmittance calculated according to BS EN410 of less than 5%, more preferably between 0% and 3%.

The present invention provides from a fifth aspect use of a sheet of soda-lime-silicate glass comprising between 0.001% and 0.1% by weight of Fe₂O₃, preferably between 0.005% and 0.07% by weight of Fe₂O₃, even more preferably between 0.005% and 0.05% by weight of Fe₂O₃, with a light absorbing coating on a major surface thereof, the coated soda-lime-silicate glass having a visible light transmission of less than 5%, preferably between 0% and 3%, as a spandrel panel.

Soda-lime-silicate glass having a low iron content is usually used in applications where it is important to maximise the sunlight passing therethrough. In contrast, the present invention uses such glass for applications where very little, if any, sunlight passes through the glazing.

The invention will now be described with reference to the following figures (not to scale).
Figure 1 shows a conventional spandrel panel using a toughened glass ply;
Figure 2 shows the transmission spectra of three spandrel panels of the type described with reference to figure 1;
Figure 3 shows a spandrel panel according to the present invention;
Figure 4 shows the variation of solar direct transmittance (calculated according to BS EN410) with iron and ferrous level for a 6mm soda-lime-silicate float glass composition;
Figure 5 shows the variation of solar direct transmittance (calculated according to BS EN410) with ferrous iron content for a 6mm soda-lime-silicate float glass composition;
Figure 6 shows the variation of visible light transmittance (calculated according to BS EN410) with iron and ferrous level for a 6mm soda-lime-silicate float glass composition;
Figure 7 shows the variation of visible light transmittance and solar direct transmittance for a 6mm soda-lime-silicate glass with 0.02% by weight Fe₂O₃ at a 10% ferrous level (calculated as Fe₂O₃) when the amount of Co₃O₄ is increased;
Figure 8 shows the reflection spectrum from the coated side of three known spandrel panels;
Figure 9 shows the reflection spectrum from the uncoated side of three known spandrel panels.
Figure 10 shows the calculated equilibrium temperature for a clear glass and low iron glass composition when heated by sunlight;
Figure 11 shows the effect on the calculated equilibrium temperature for a coated glass when the Fe₂O₃ content of the glass ply carrying the coating is reduced; and
Figure 12 shows another spandrel panel in accordance with the present invention.

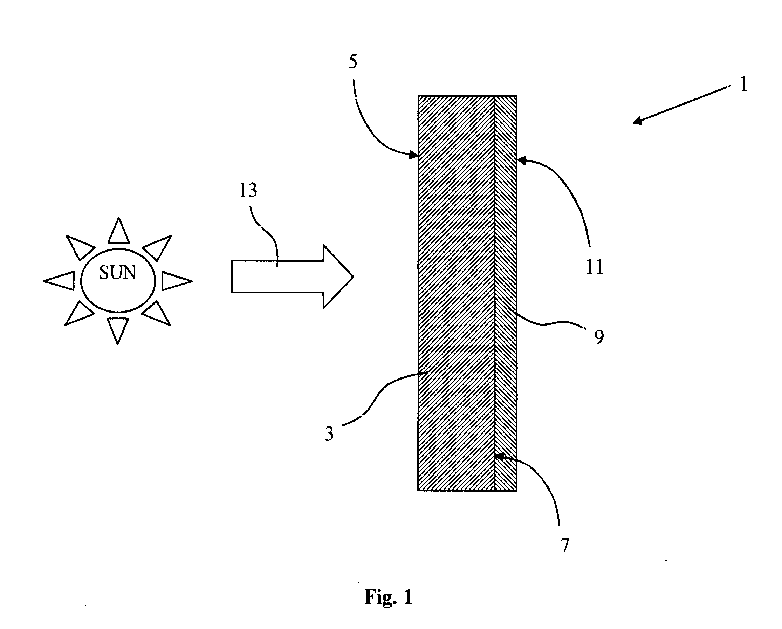

Figure 1 shows a known spandrel panel 1 comprising a sheet of clear glass 3. The sheet of clear glass 3 has a composition typical of a glass made using the float process. A typical composition of the clear float glass is (by weight), SiO₂ 69 - 74 %; Al₂O₃ 0 - 3 %; Na₂O 10 - 16 %; K₂O 0 - 5 %; MgO 0 - 6 %; CaO 5 - 14 %; SO₃ 0 - 2 %; Fe₂O₃ 0.11 % The glass may also contain other additives, for example, refining aids, which would normally be present in an amount of up to 2 %. The aforementioned glass composition is a typical soda-lime-silicate (sometimes referred to as soda-lime-silica) glass composition.

The clear glass sheet 3 contains about 0.11% by weight Fe₂O₃ at a ferrous content expressed as Fe₂O₃ of about 25%. The ferrous content may be determined using the absorption of the clear glass sheet at 1000nm, and an appropriate extinction coefficient for ferrous iron in the particular glass. The technique of optically determining ferrous content of iron containing glass is well known to a person skilled in the art.

The clear glass sheet 3 has a first major surface 5 and a second major surface 7. In this example the clear glass sheet is 6mm thick. The clear glass sheet may be 2-25mm thick.

The clear glass sheet 3 at a thickness of 6mm has a DSHT calculated according to BS EN410 air mass 1 of about 79%. The clear glass sheet 3 at a thickness of 6mm has a visible light transmission calculated according to BS EN410 of about 88%.

There is a low visible light transmittance coating 9 on surface 7. The coating is of the type described in EP0404282B1, EP0441011B1 and EP0504790B1 i.e. b depositing the respective layers under vacuum using magnetron cathode sputtering, although any suitable technique for depositing the coating may be used, such as atmospheric chemical vapour deposition.

The coating 9 has an exposed surface 11. In practice, the spandrel is usually said to have two surfaces, surface one and surface two. Surface one is that first surface when viewed in the direction of arrow 13, and surface two is the outermost surface.

When in use, the spandrel 1 is positioned such that the surface 5 faces the outside of the building in which it is installed, and surface 11 faces the interior of the building in which it is installed.

Due to the highly absorbing characteristics of coating 9, the coating transfers heat to the clear glass sheet 3 raising the temperature thereof. In addition, the iron present in the glass, in particular the ferrous iron also absorbs sunlight thereby raising the glass temperature. If there is a temperature gradient in the glass of about 40 °C, it is possible that the glass will break due to thermal stress. To avoid such thermal breakage, the glass is thermally toughened. For an equivalent glass sheet, a thermally toughened glass sheet is able to withstand a temperature gradient in the glass of 200 °C compared to about 40 °C for an annealed glass.

In addition, the coating 9 is highly reflective so sunlight incident on the spandrel panel 1 in the direction of arrow 13 is absorbed as it passes through the clear glass sheet 3 towards the coating 9 and also as the sunlight is reflected off the coating 9 back through the clear glass sheet 3 before emerging from surface 5.

The clear glass sheet 3 is toughened prior to being coated, although a suitable coating may be applied to an annealed glass sheet and then subsequently toughened.

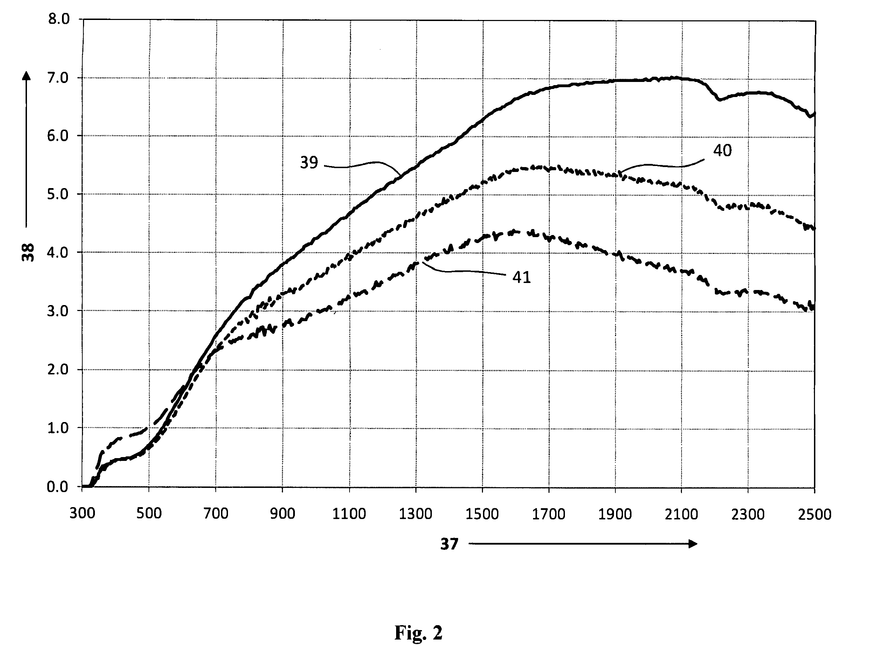

Figure 2 shows the transmission spectra of three spandrel panel SP1, SP2 and SP3. Axis 15 is the wavelength in nanometres (nm) and axis 16 is the percentage transmission of the spandrel panel.

The transmission spectrum of spandrel panel SP1 is shown as line 17. Spandrel panel SP1 consists of an E200 coating on a 7.76mm thick sheet of toughened clear float glass. The clear float glass has about 0.11% by weight Fe₂O₃. The E200 coating is a multilayer coating on the clear glass sheet. Spandrel panel SP1 therefore has the construction: glass / 72nm SnZnOx / 1nm NiCr / 30nm suboxidic CrOx / 15nm Cr.

The transmission spectrum of spandrel panel SP2 is shown as line 18. Spandrel panel SP2 consists of an E140 coating on a 7.95mm thick sheet of toughened clear float glass. The clear float glass has about 0.11% by weight Fe₂O₃. The E140 coating is a multilayer coating. Spandrel panel SP2 therefore has the construction: glass / 65nm SnZnOx / 1nm NiCr / 10nm suboxidic CrOx / 25nm Cr.

The transmission spectrum of spandrel panel SP3 is shown as line 19. Spandrel panel SP3 consists of an E120 coating on an 8.00mm thick sheet of toughened clear float glass. The clear float glass has about 0.11% by weight Fe₂O₃. The E120 coating is a multilayer coating. Spandrel panel SP3 therefore has the construction: glass / 50nm SnZnOx / 1nm NiCr / 30nm Cr.

Various optical properties of the spandrel panels SP1, SP2 and SP3 are given in table 1.

In each of the spectra shown in figure 2 the coating was on a major surface of a ply of toughened clear float glass. Each transmission spectrum 39, 40, 41 will be essentially identical if each respective coating was on an equivalent thickness sheet of annealed clear float glass ply i.e. the ply was not toughened.

Due to the very highly absorbing nature of the three coatings E200, E140 and E120, the transmission spectrum in the visible region is little affected by the clear float glass ply. The transmission behaviour of the spandrel in the visible region is essentially determined solely by the E200/E140/E120 coating.

In table 1 below, various optical properties of the monolithic spandrels described with reference to figure 2 are given. In the table, each of the optical properties has been calculated according to BS EN 410 (1998):

**Table 1**

| Spandrel Panel | Visible light transmittance | Solar direct transmittance | Colouring rendering index |
|---|---|---|---|
| SP1 | 1.2% | 2.8% | 58.1% |
| SP2 | 1.1% | 2.4% | 58.2% |
| SP3 | 1.4% | 2.2% | 72.6% |

Using the CIELAB 2° observer and illuminant D65, the transmitted colour of each of the above spandrel panels is SP1, a* = 4.8, b* = 10.0; SP2, a* = 4.8, b* = 9.0; SP3 a* = 3.4, b* = 6.5.

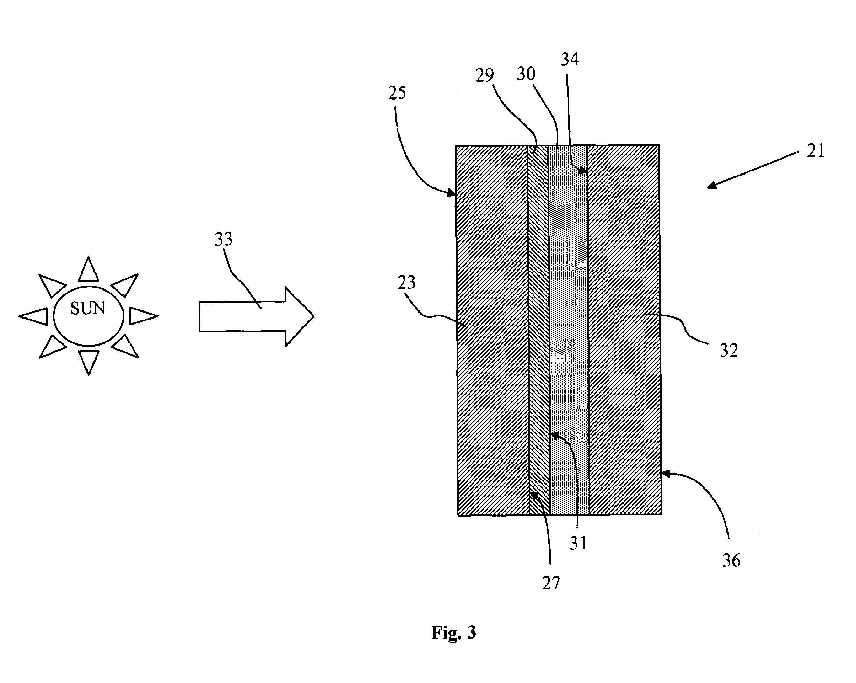

Figure 3 shows a laminated spandrel panel 21 in accordance with the first aspect of the present invention. The laminated spandrel panel 21 comprises a first ply of glazing material which is a sheet of low iron glass 23. The iron content of the glass expressed as Fe₂O₃ is about 0.02% by weight. Otherwise, the glass has essentially the same composition as the glass sheet 3 used in figure 1.

The low iron glass sheet 23 has a first major surface 25 and a second major surface 27. There is a low visible light transmittance coating 29 that has been deposited on the surface 27. The coating 29 is the same as the coating 9 in Figure 1. The coating may be any of the coatings herein referred to as EN200, EN140 and EN120. Such coatings are made in accordance with EP0504790B1, that is by depositing the respective layers under vacuum using magnetron cathode sputtering.

The sheet of low iron glass 23 at a thickness of 6mm has a solar direct transmittance calculated according to BS EN410 air mass 1 of about 89%. The sheet of low iron glass 23 at a thickness of 6mm has a visible light transmission calculated according to BS EN410 of about 91%.

Low iron soda-lime-silicate glass in sheet form is commercially available, for example Pilkington Group Limited offer for sale Pilkington Optwhite™. Other low iron glass compositions suitable for use as the sheet of low iron glass 23 are known, examples thereof being given in US2004/0121896A1, US2008/0085827A1, WO2009/150451A1 and WO2010/134796A1.

The laminated spandrel panel 21 also comprises a second ply of glazing material 32. In this particular example, the second ply of glazing material is a sheet of clear glass, having a composition essentially the same composition as the glass sheet 23 except with an iron level expressed as Fe₂O₃ of about 0.11% by weight. However, in other embodiments, the clear glass sheet may be replaced with any other suitable pane of glazing material, such as a body tinted glass pane or a plastics pane. The optical quality of the second pane 32 is of little consequence as it is not viewable when viewed in the direction of arrow 33 because of the highly light absorbing properties of the coating 29.

The second ply of glazing material has a first major surface 34 and a second major surface 36. The second glazing ply 32 is joined to the first glazing ply 23 by a ply of interlayer material 30. In this particular example, PVB was used, but other interlayer materials may be used. The ply of interlayer material 30 is coextensive with the second major surface 27 of the first ply of glazing material. The ply of interlayer material is coextensive with the first major surface 34 of the second ply of glazing material. The PVB may be clear or tinted. The PVB ply 30 contacts the surface 31 of the coating 29 and the surface 34 of the second ply of glazing material 32 to provide full surface bonding of the first ply of glazing material to the second ply of glazing material. Preferably the interlayer is bonded without the need to use an additional coupling agent between the interlayer and the surface 29 and/or surface 34.

The laminated spandrel 21 has a visible light transmittance of less than 3% (determined according to BS EN410). The spandrel 21 has optical properties very similar to spandrel panels SP1, SP2 or SP3 because the visible light transmittance properties of these known spandrel panels is essentially determined by each respective highly visible light absorbing coating thereon.

In use, the spandrel 21 is located in the façade of a building such that the surface 25 of glass sheet 23 faces the outside of the building and the surface 36 of glass sheet 32 faces the interior of the building. If the spandrel is located the other way round, the benefit of the invention will not be realised. However, in certain applications, such as interior applications for the spandrel panels, the orientation of the spandrel may be less critical.

In this particular example, both plies of glazing material 23 and 32 are annealed. This is advantageous because the spandrel panel can be made in large sizes and cut to size as required. In addition, because neither glass sheet 23 or 32 has been toughened, there is no risk of spontaneous breakage due to the possible formation of nickel sulphide inclusions that may occur during the thermally toughening process.

It is possible for either or both of the plies of glazing material 23, 32 to be toughened, but in this case the size of the spandrel panel and any holes therein must be provided before the toughening process.

It will be readily apparent to a person skilled in the art that the spandrel panel 21 may be a pane in an insulated multiple pane glazing, such as a double glazed unit.

Alternatively, the spandrel panel 21 may be used in a frameless glazing system, in which case the spandrel panel 21 may have at least one bore therein through which a suitable fixing element may be attached, suitable for attaching the spandrel panel to the building.

As has been previously discussed, the temperature rise of the glass sheet is caused by the highly absorbing coating transferring heat to the underlying glass, and also by the iron, in particular ferrous iron, content of the glass. The ability of the underlying glass sheet to heat up depends upon the ability of the glass sheet to absorb heat.

When iron is present in glass it can exist in two oxidation states. Ferrous iron (Fe²⁺) absorbs in the visible-IR region, whereas ferric iron (Fe³⁺) absorbs in the UV-visible region.

The amount of ferrous iron in a glass can be varied by changing the melting conditions under which the glass is prepared. If the melting conditions are oxidising, there will be less ferrous iron in the glass.

Usually melting conditions are optimised to produce an acceptable quality glass product, and for clear float glass produced using the float process, this results in a ferrous iron content (expressed as Fe₂O₃) of 18-25% of the total Fe₂O₃ content. Lower ferrous content can be obtained by adding oxidising agents such as ceria to the batch of glass making raw materials.

To avoid the need to thermally toughen the glass ply 23, the amount of heat absorbed by the glass should be reduced by reducing any absorbing components from the glass. It is possible that the glass sheet 23 may contain optical absorbers to slightly modify the colour of the glass sheet prior to the application of the coating 29, provided the glass does not heat up as much as an equivalent ply of clear float glass.

The preferred way to reduce the amount of heat absorption of the glass sheet 23 is to reduce the amount of iron oxide present in the glass. This provides a means of reducing the ferrous iron content of the glass. Alternatively, the percentage of ferrous iron in the glass may be reduced, although this may give rise to difficulties in producing the glass using a float process.

In use, sunlight passes through the low iron glass sheet 23 and strikes the coating 29. The sunlight is reflected by the coating and must pass through the low iron glass sheet 23. The low iron glass sheet 23 allows more of the sunlight to be reflected (meaning less sunlight is absorbed by the glass sheet 23) and consequently the low iron glass sheet does not heat up as much compared to when the low iron glass sheet 23 is replaced by an equivalent glass sheet containing more iron or ferrous iron. Since the low iron glass sheet 23 does not heat up as much, it is less likely that there will be a sufficiently high temperature gradient within the low iron glass sheet 23 such that thermal breakage can occur. Consequently, the low iron glass sheet 23 does not need to be thermally toughened.

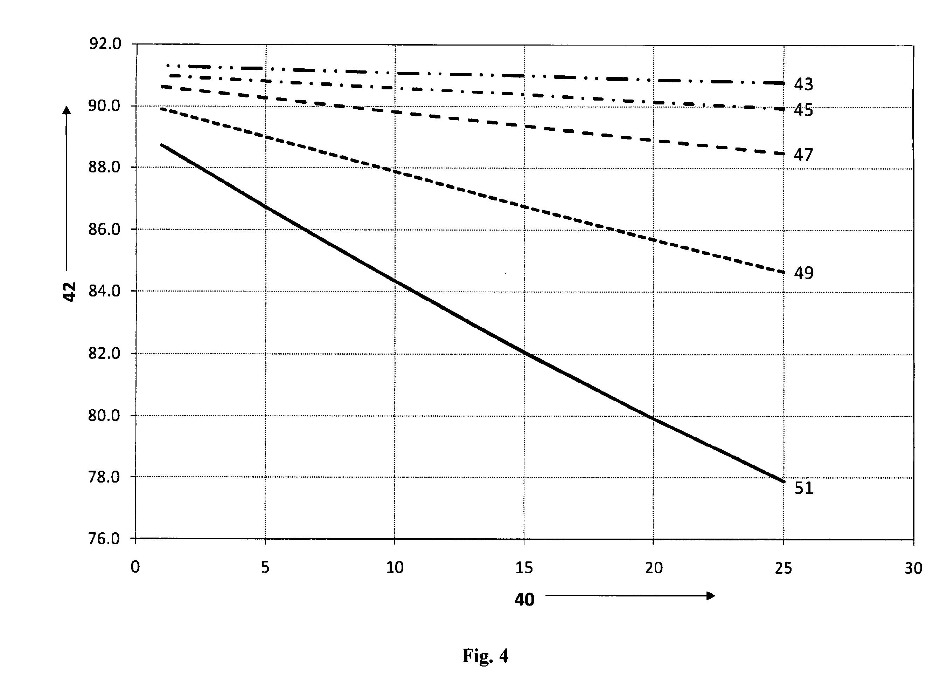

Figure 4 shows the variation of the solar direct transmittance calculated according to BS EN410 (1998) with varying iron (Fe₂O₃) and percentage ferrous content express as Fe₂O₃ for a 6mm float glass. The data is taken from a computer model that predicts the float glass transmission spectrum.

Axis 40 represents the percentage of ferrous iron expressed as Fe₂O₃ in the float glass. Axis 42 represents the solar direct transmittance (BS EN410) value for the 6mm float glass with the respective Fe₂O₃ content based on the calculated transmission spectrum. Five different levels of Fe₂O₃ were modelled, line 43 at 0.005% by weight Fe₂O₃, line 45 was at 0.01% by weight Fe₂O₃, line 47 was at 0.02% by weight Fe₂O₃, line 49 was at 0.05% by weight Fe₂O₃ and line 51 was at 0.11% by weight Fe₂O₃. For the avoidance of doubt, the ferrous content of the glass expressed as Fe₂O₃ is determined by the product of the Fe₂O₃ multiplied by the percentage of ferrous iron expressed as Fe₂O₃. Hence for 0.1% by weight total Fe₂O₃ at a ferrous percentage of 20%, the content of ferrous iron in the glass is 0.02% by weight expressed as Fe₂O₃.

Figure 4 shows that by reducing the percentage of ferrous iron in the glass, the solar direct transmittance increases. Using the direct solar transmittance as a measure of the ability of a glass to absorb heat, figure 4 shows that the same direct solar transmittance can be obtained at different Fe₂O₃ levels in the glass, providing the ferrous content is varied.

To obtain acceptable melting of the glass using the float process, the ferrous percentage of clear float glass is usually in the range 18 to 25%.

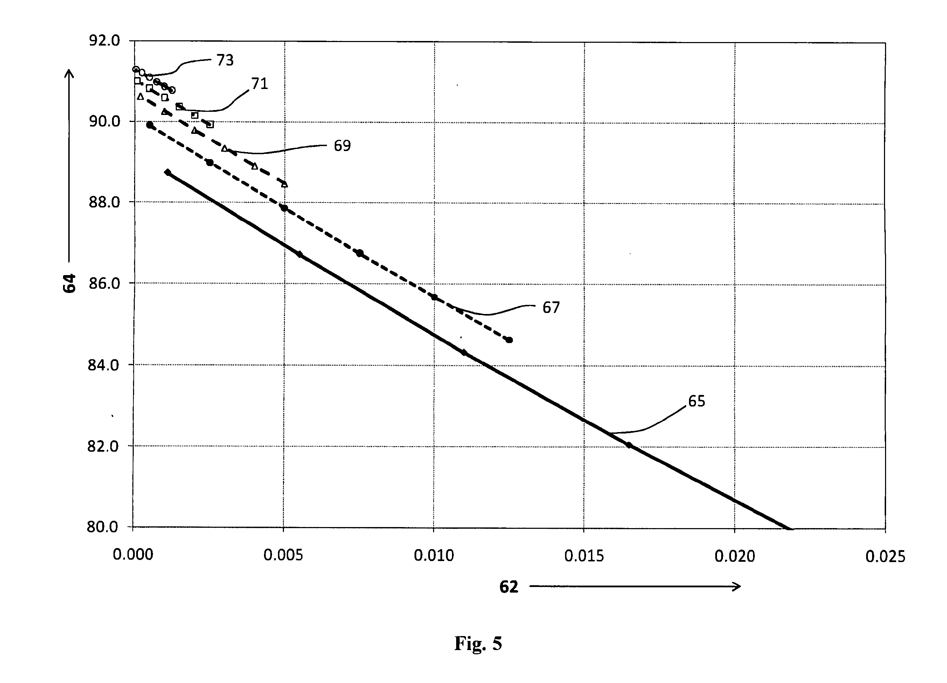

Figure 5 shows the variation of solar direct transmittance calculated according to BS EN410 (1998) with ferrous iron content for a 6mm soda-lime-silicate float glass composition (based on computer modelled transmission spectra).

As for figure 4, the transmission spectra of a number of iron containing glasses at different ferrous percentage levels were modelled. Axis 62 represents the percent by weight of ferrous iron expressed as Fe₂O₃ in the modelled glass. Axis 64 represents the solar direct transmittance for the modelled glass.

Line 65 represents a glass containing 0.11% by weight Fe₂O₃. Line 67 represents a glass containing 0.05% by weight Fe₂O₃. Line 69 represents a glass containing 0.02% by weight Fe₂O₃. Line 71 represents a glass containing 0.01% by weight Fe₂O₃. Line 73 represents a glass containing 0.005% by weight Fe₂O₃.

As was shown in figure 4, the same solar direct transmittance can be obtained for different total iron levels providing the amount of ferrous iron is changed accordingly.

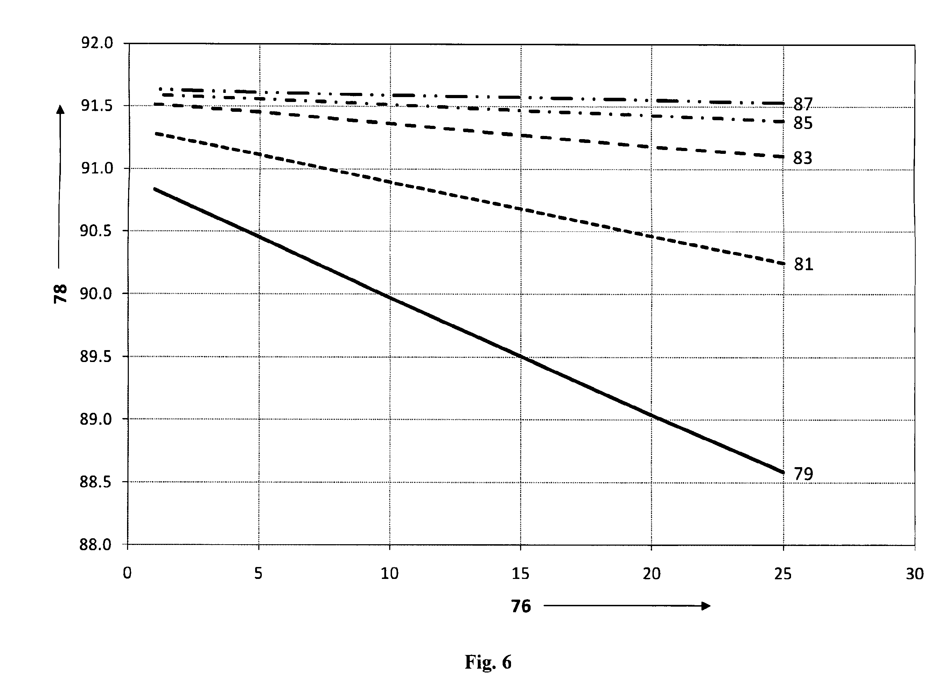

Figure 6 shows the variation of the visible light transmittance calculated according to BS EN410 (1998) with varying iron (Fe₂O₃) and percentage ferrous content express as Fe₂O₃ for a 6mm float glass. The data is taken from a computer model that predicts the float glass transmission spectrum.

Axis 76 represents the percentage of ferrous iron expressed as Fe₂O₃ in the float glass. Axis 78 represents the visible light transmittance value for the 6mm float glass with the respective Fe₂O₃ content based on the calculated transmission spectrum.

Line 79 represents a glass containing 0.11% by weight Fe₂O₃. Line 81 represents a glass containing 0.05% by weight Fe₂O₃. Line 83 represents a glass containing 0.02% by weight Fe₂O₃. Line 85 represents a glass containing 0.01% by weight Fe₂O₃. Line 87 represents a glass containing 0.005% by weight Fe₂O₃.

To obtain a very high visible light transmittance, i.e. above 90%, the 6mm glass should contain as little Fe₂O₃ as possible.

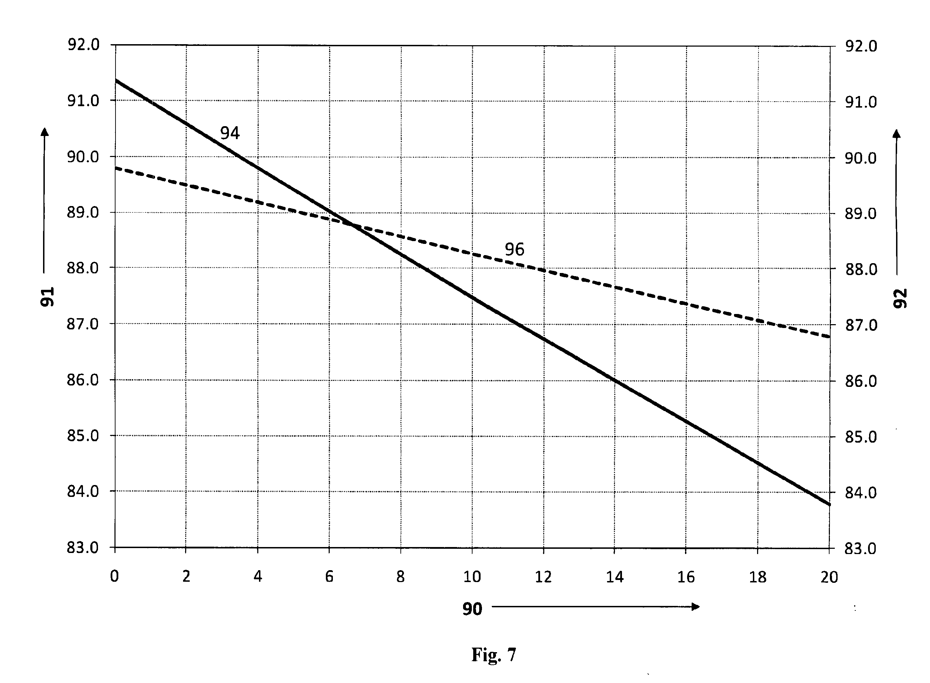

Figure 7 shows the variation of the visible light transmittance and solar direct transmittance calculated according to BS EN410 (1998) for a 6mm thick float glass with 0.02% by weight Fe₂O₃ at a ferrous level of 10% (calculated as Fe₂O₃) and different levels of Co₃O₄. The data is taken from a computer model that predicts the float glass transmission spectrum.

Axis 90 represents the amount of Co₃O₄ (in ppm) in the glass. Axis 91 represents the percentage visible light transmittance value for the 6mm float glass with the Fe₂O₃ and Co₃O₄ content based on the calculated transmission spectrum. Axis 92 represents the percentage solar direct transmittance value for the 6mm float glass with the Fe₂O₃ and Co₃O₄ content based on the calculated transmission spectrum.

Line 94 represents the visible light transmittance and line 96 represents the solar direct transmittance.

Figure 7 illustrates that it is possible to obtain high direct solar transmittance values when other impurities that absorb visible light are included in the glass composition. For a low level of Fe₂O₃ in glass, the level of such impurities should be kept to sufficiently low so as not to reduce the direct solar transmittance (and visible light transmittance) and thereby increase the heat absorption behaviour of the glass. Co₃O₄ is used to illustrate such an impurity, although other impurities include TiO₂, Cr₂O₃, NiO, CeO₂ and Se.

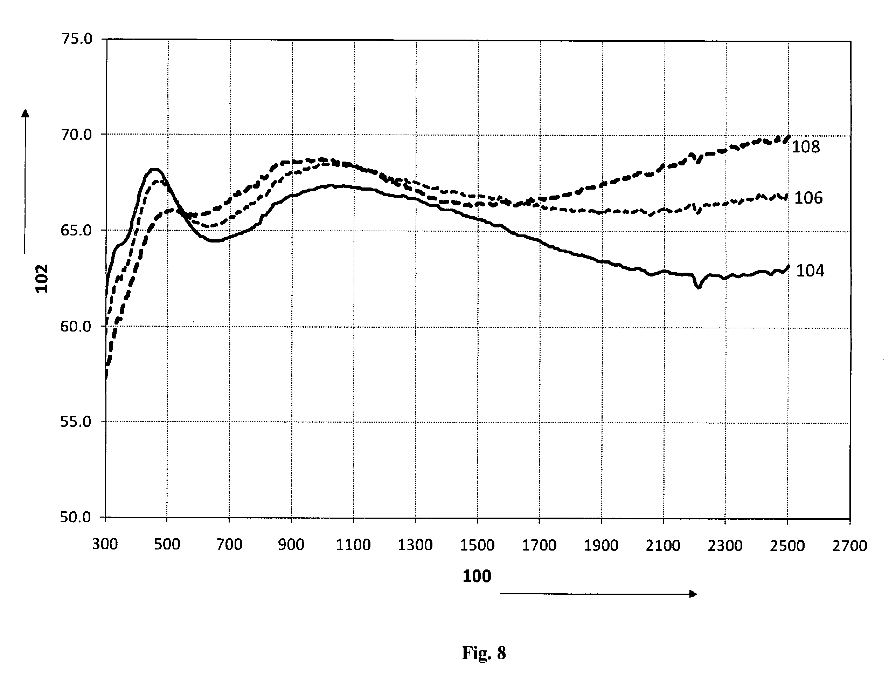

Figure 8 shows the reflectance spectra of the three known spandrel panels SP1, SP2 and SP3 from the coated side. Axis 100 is the wavelength in nanometres (nm) and axis 102 is the percentage reflection from the coated surface of the spandrel panel.

Line 104 represents the reflection from the coated surface of spandrel panel SP1. Line 106 represents the reflection spandrel panel SP2. Line 108 represents the reflection from spandrel panel SP3.

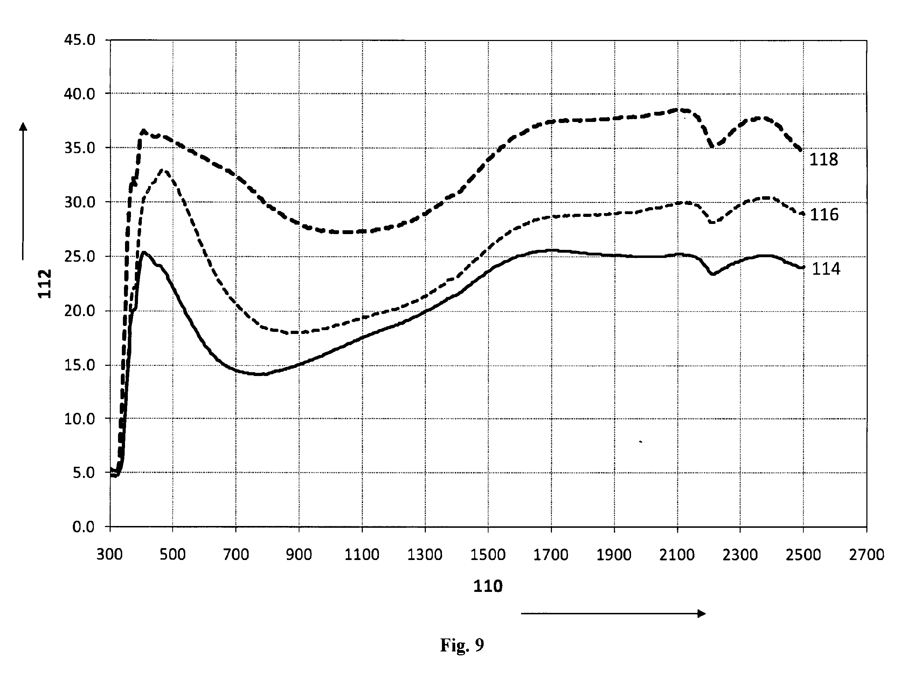

Figure 9 shows the reflectance spectra of the three known spandrel panels SP1, SP2 and SP3 from the uncoated side. Axis 110 is the wavelength in nanometres (nm) and axis 112 is the percentage reflection from the uncoated surface of the spandrel panel.

Line 114 represents the reflection from the coated surface of spandrel panel SP1. Line 116 represents the reflection spandrel panel SP2. Line 118 represents the reflection from spandrel panel SP3.

When sunlight is incident upon the uncoated side of the spandrel panels SP1, SP2 and SP3, some sunlight is absorbed by the clear float glass substrate as it passes through the glass. When the sunlight reaches the coating, it is reflected back through the glass. In both cases, this contributes to raising the temperature of the spandrel panel.

It is possible to model the equilibrium glass temperature of a glass sheet when exposed to direct sunlight and methods of carrying out such calculations are known to a person skilled in the art.

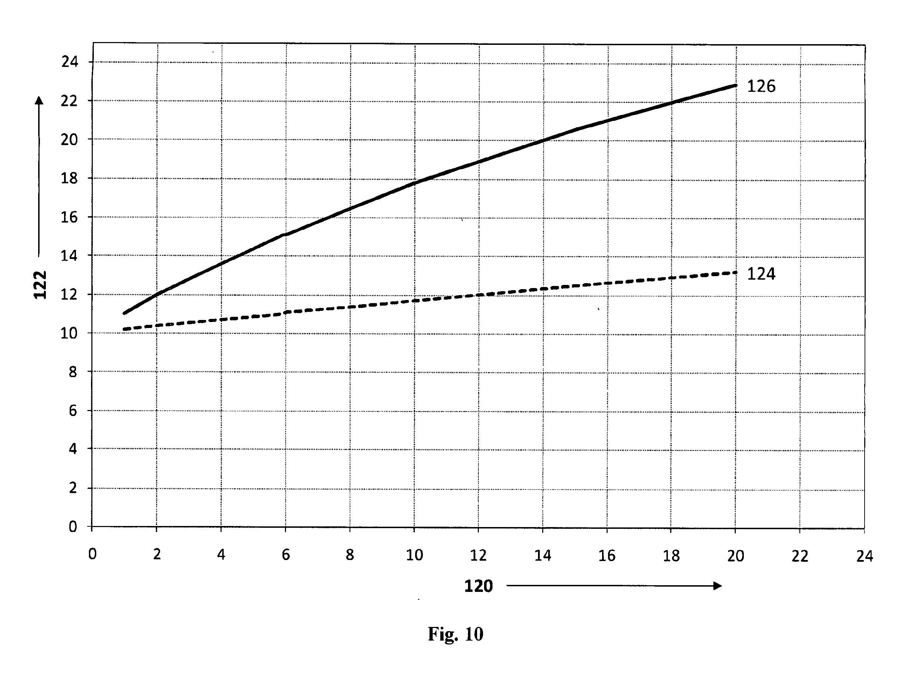

Using such a computer model, and using the same boundary conditions for each calculation, thermal data for clear float glass and a low iron glass (Optiwhite™) was obtained. The boundary conditions included internal and external temperatures both set to 10°C, zero wind speed and a typical radiation intensity for the sun of 600W/m². Solar absorption was calculated according to BS EN410. Each glass was modelled at a thickness range between 1 and 20mm and the glass equilibrium temperature as a function of glass thickness is shown in figure 10.

In figure 10, axis 120 is the glass thickness in mm and axis 122 is the equilibrium glass temperature in °C.

Line 124 is the equilibrium temperature for a low iron float glass with about 0.02% by weight Fe₂O₃. Line 126 is the equilibrium glass temperature for a clear float glass with about 0.11% by weight Fe₂O₃.

As figure 10 shows, for a glass pane with a lower Fe₂O₃ content, the calculated equilibrium glass temperature when exposed to the sun is lower compared to equivalent glass pane with a higher Fe₂O₃ content.

For typical glass thicknesses used in architectural applications, i.e. above 6mm, the equilibrium temperature of the clear float glass compared to the low iron float glass is about 4°C higher at a thickness of 6mm and about 10°C higher at a thickness of 20mm.

As is also evident from figure 10, in addition to reducing the Fe₂O₃ content of the glass to reduce the equilibrium temperature of the glass, it is possible to also reduce the glass thickness. The overall thickness of the spandrel panel must be such that the spandrel panel has sufficient strength and rigidity, so reducing the glass thickness in isolation may not always be possible.

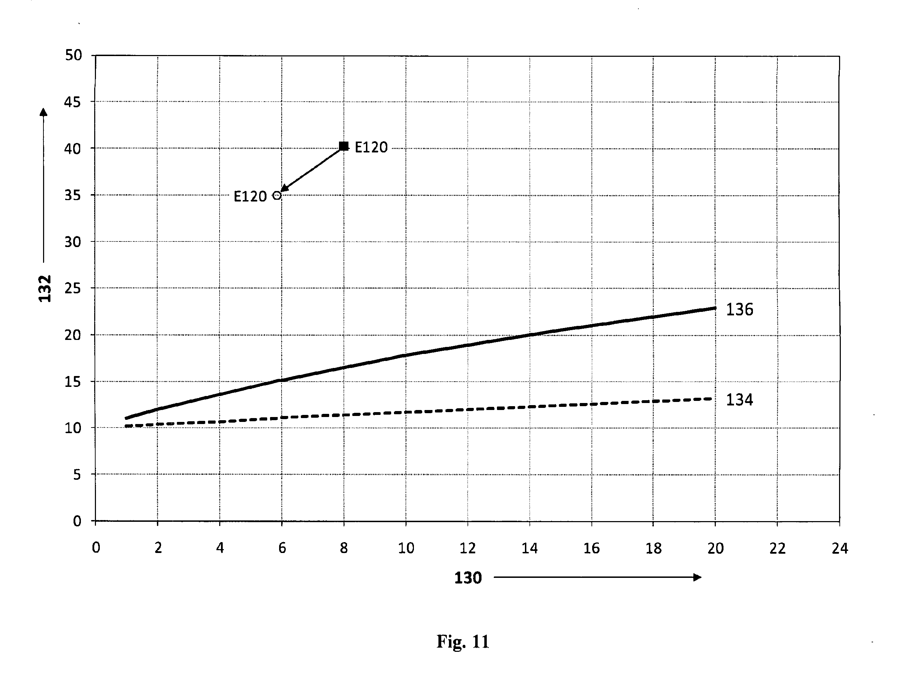

Figure 11 shows the predicted temperature drop of an E120 coated float glass sheet with decreasing Fe₂O₃ content and thickness.

Axis 130 is the glass thickness in mm and axis 132 is the equilibrium glass temperature in °C.

Line 134 is the equilibrium temperature for a low iron float glass with about 0.02% by weight Fe₂O₃. Line 136 is the equilibrium glass temperature for a clear float glass with about 0.11% by weight Fe₂O₃.

For an 8mm thick clear glass sheet having an E120 coating on a major surface thereof, the calculated equilibrium temperature of the coated glass sheet with the coating facing away from the incident sunlight is about 40°C, represented by the black square in figure 11. In contrast, the calculated equilibrium temperature for an 8mm uncoated clear glass sheet is about 16.5°C.

By dropping the Fe₂O₃ level of the glass sheet to about 0.02% by weight Fe₂O₃, and reducing the glass thickness to 5.85mm, the coated glass sheet now has a calculated equilibrium temperature of about 35°C (shown as the white circle in figure 11). By dropping the Fe₂O₃ content and reducing the glass thickness, the equilibrium temperature has dropped by about 5°C.

By reducing the equilibrium temperature of the coated glass sheet, this decreases the potential for a temperature gradient to exist in the coated glass sheet (for example due to differential heating wherein a portion of the coated glass sheet is shadowed from the sun) of sufficient magnitude that thermal breakage can occur. As such, the glass sheet does not need to be toughened and can be laminated instead. The glass thickness of the glass ply carrying the E120 coating may be reduced so that the overall weight of the laminated spandrel panel is not too great.

It may be necessary to use different levels of Fe₂O₃ in the glass ply carrying the coating for different visible light absorbing coatings. As the light transmission of the spandrel panel approaches zero, preferably the ability of the first ply of glazing material to absorb heat should be reduced progressively. One way this may be achieved is to reduce the Fe₂O₃ level in the first ply of glazing material to zero.

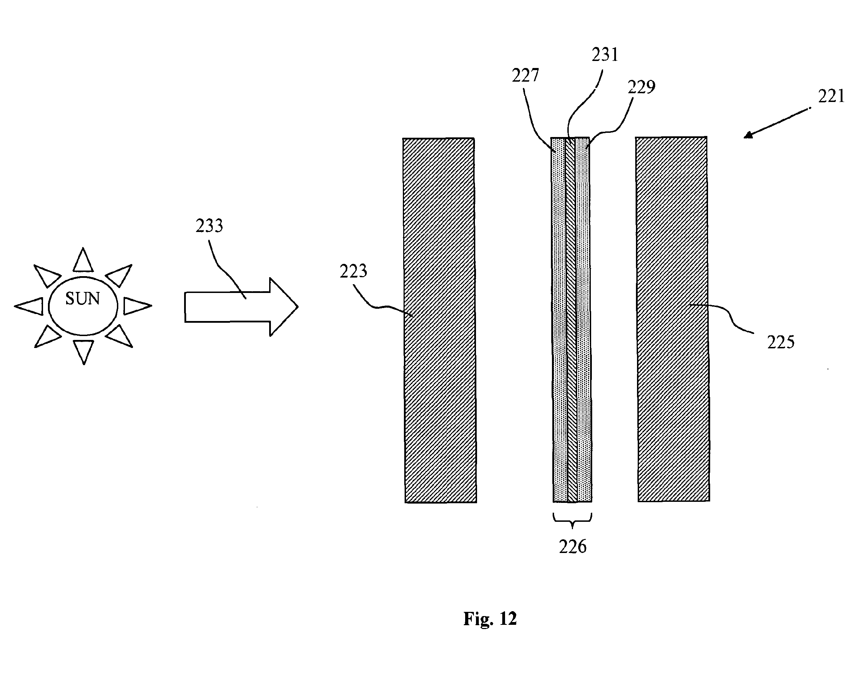

Figure 12 shows an exploded view of another laminated spandrel panel 221 in accordance with the first aspect of the present invention.

The spandrel panel 221 comprises a first ply of low iron float glass 223 that has less than 0.02% by weight Fe₂O₃, a second ply of clear float glass 225 that has about 0.11% by weight Fe₂O₃ and an interlayer ply 226. The interlayer ply 226 consists of two PVB plies 227, 229 with a coating 231 in between. The coating may be of the type referred to as E120, E140 and E200 above, suitably adapted for incorporation in between the two plies of PVB. The interlayer ply 226 may be prepared in accordance with US 6,365,284B1.

When installed the glass ply 223 faces the outside of the building and the glass ply 225 faces the interior of the building. When viewed in the direction of arrow 233, the spandrel panel 221 is essentially opaque. Due to the low Fe₂O₃ content of the ply of glass 223, the first glass ply does not heat up as much as an equivalent glass ply containing 0.11% or more Fe₂O₃ by weight.

Whilst the present invention has been described with particular reference to soda-lime-silicate glass produced using the float process, other glass compositions are also possible providing the level of iron in the glass is such that thermal breakage cannot occur. In addition, sheet glass produced by other methods, such as rolled plate, is also useful as one or either ply of glazing material. Rolled glass may have a pattern on one or both major surfaces.

## Claims

1. A laminated spandrel panel (21, 221) comprising a first ply of glazing material (23, 223) and a second ply of glazing material (32, 225), there being a ply of interlayer material (30, 226) in between the first ply of glazing material and the second ply of glazing material, wherein the spandrel panel comprises light transmission reducing means (29, 231) for providing the spandrel panel with suitably low visible light transmittance, the light transmission reducing means comprising a coating on a major surface of the first ply of glazing material, wherein the coating is a light absorbing multilayer coating comprising at least one metal layer and wherein the coating faces the ply of interlayer material, further wherein the first ply of glazing material is a sheet of annealed glass comprising between 0.001% and 0.09% by weight Fe₂O₃ and wherein the first ply of glazing material without the light transmission reducing means has lower heat absorption than an equivalent ply of clear float glass.

2. A spandrel panel according to claim 1, wherein the coating is in direct contact with the ply of interlayer material.

3. A spandrel panel according to any preceding claim, wherein the second ply of glazing material is in direct contact with the ply of interlayer material.

4. A spandrel panel according to any preceding claim, wherein the first ply of glazing material is a sheet of annealed soda-lime-silicate glass.

5. A spandrel panel according to any preceding claim, wherein the annealed glass sheet comprises between 0.005% and 0.05% by weight Fe₂O₃.

6. A spandrel panel according to any preceding claim, wherein the second ply of glazing material is a sheet of plastic material or a sheet of annealed glass, preferably a sheet of annealed soda-lime-silicate glass.

7. A spandrel panel according to any preceding claim, wherein the first ply of glazing material without the light transmission reducing means has a solar direct transmittance calculated according to BS EN410 of greater than 80%, preferably greater than 85%, more preferably 85% to 91%.

8. A spandrel panel according to any preceding claim wherein the light transmission reducing means are such that the spandrel panel has a visible light transmittance calculated according to BS EN410 of less than 5%, preferably between 0% and 3%.

9. A spandrel panel according to any preceding claim, wherein the coating covers the entire major surface of the first ply of glazing material.

## Patentansprüche

1. Laminierte Fassadenplatte (21, 221), die eine erste Lage aus Verglasungsmaterial (23, 233) und eine zweite Lage aus Verglasungsmaterial (32, 225) umfasst, wobei zwischen der ersten Lage aus Verglasungsmaterial und der zweiten Lage aus Verglasungsmaterial eine Lage aus Zwischenschichtmaterial (30, 226) ist, wobei die Fassadenplatte eine Einrichtung (29, 231) zum Verringern der Lichtdurchlässigkeit umfasst, um die Fassadenplatte mit einer geeignet geringen Durchlässigkeit für sichtbares Licht zu versehen, wobei die Einrichtung zum Verringern der Lichtdurchlässigkeit eine Beschichtung auf einer Hauptfläche der ersten Lage aus Verglasungsmaterial umfasst, wobei die Beschichtung eine lichtabsorbierende Mehrschichtbeschichtung ist, die mindestens eine Metallschicht umfasst, und wobei die Beschichtung der Lage aus Zwischenschichtmaterial gegenüberliegt, wobei weiterhin die erste Lage aus Verglasungsmaterial ein Bogen aus getempertem Glas ist, das 0,001 Gew.% bis 0,09 Gew.-% Fe₂O₃ enthält, und wobei die erste Lage aus Verglasungsmaterial ohne die Einrichtung zum Verringern der Lichtdurchlässigkeit eine geringere Wärmeabsorption als eine entsprechende Lage aus klarem Floatglas aufweist.

2. Fassadenplatte nach Anspruch 1, wobei die Beschichtung in direktem Kontakt mit der Lage aus Zwischenschichtmaterial ist.

3. Fassadenplatte nach einem vorhergehenden Anspruch, wobei die zweite Lage aus Verglasungsmaterial in direktem Kontakt mit der Lage aus Zwischenschichtmaterial ist.

4. Fassadenplatte nach einem vorhergehenden Anspruch, wobei die erste Lage aus Verglasungsmaterial ein Bogen aus getempertem Kalknatronglas ist.

5. Fassadenplatte nach einem vorhergehenden Anspruch, wobei der getemperte Glasbogen 0,005 Gew.-% bis 0,05 Gew.% Fe₂O₃ enthält.

6. Fassadenplatte nach einem der vorhergehenden Ansprüche, wobei die zweite Lage aus Verglasungsmaterial ein Bogen aus Kunststoffmaterial oder ein Bogen aus getempertem Glas, vorzugsweise ein Bogen aus getempertem Kalknatronglas, ist.

7. Fassadenplatte nach einem der vorhergehenden Ansprüche, wobei die erste Lage aus Verglasungsmaterial ohne die Einrichtung zum Verringern der Lichtdurchlässigkeit eine direkte Durchlässigkeit für Sonnenlicht, die nach BS EN410 berechnet wird, von mehr als 80 %, vorzugsweise mehr als 85 %, noch bevorzugter im Bereich von 85 % bis 91 %, aufweist.

8. Fassadenplatte nach einem der vorhergehenden Ansprüche, wobei die Einrichtung zum Verringern der Lichtdurchlässigkeit so ist, dass die Fassadenplatte eine Durchlässigkeit für sichtbares Licht, die nach BS EN410 berechnet wird, von weniger als 5 %, vorzugsweise im Bereich von 0 % bis 3 %, aufweist.

9. Fassadenplatte nach einem der vorhergehenden Ansprüche, wobei die Beschichtung die vollständige Hauptfläche der ersten Lage aus Verglasungsmaterial bedeckt.

## Revendications

1. Panneau-allège feuilleté (21, 221) comprenant une première couche de matériau de vitrage (23, 223) et une seconde couche de matériau de vitrage (32, 225), une couche de matériau intercalaire (30, 226) se trouvant entre la première couche de matériau de vitrage et la seconde couche de matériau de vitrage, dans lequel le panneau-allège comprend des moyens de réduction de transmission de la lumière (29, 231) destinés à conférer au panneau-allège une transmittance de la lumière visible convenablement faible, les moyens de réduction de transmission de la lumière comprenant un revêtement sur une surface principale de la première couche de matériau de vitrage, dans lequel le revêtement est un revêtement multicouche absorbant la lumière et comprenant au moins une couche métallique et dans lequel le revêtement fait face à la couche de matériau intercalaire, dans lequel en outre la première couche de matériau de vitrage est une feuille de verre recuit comprenant entre 0,001 % et 0,09 % en poids de Fe₂O₃ et dans lequel la première couche de matériau de vitrage sans les moyens de réduction de transmission de la lumière présente une absorption de la chaleur inférieure à celle d'une couche équivalente de verre flotté transparent.

2. Panneau-allège selon la revendication 1, dans lequel le revêtement est en contact direct avec la couche de matériau intercalaire.

3. Panneau-allège selon l'une quelconque des revendications précédentes, dans lequel la seconde couche de matériau de vitrage est en contact direct avec la couche de matériau intercalaire.

4. Panneau-allège selon l'une quelconque des revendications précédentes, dans lequel la première couche de matériau de vitrage est une feuille de verre de silicate sodocalcique recuit.

5. Panneau-allège selon l'une quelconque des revendications précédentes, dans lequel la feuille de verre recuit comprend entre 0,005 % et 0,05 % en poids de Fe₂O₃.

6. Panneau-allège selon l'une quelconque des revendications précédentes, dans lequel la seconde couche de matériau de vitrage est une feuille de matière plastique ou une feuille de verre recuit, de préférence une feuille de verre de silicate sodocalcique recuit.

7. Panneau-allège selon l'une quelconque des revendications précédentes, dans lequel la première couche de matériau de vitrage sans les moyens de réduction de transmission de la lumière présente une transmittance directe solaire calculée selon BS EN410 supérieure à 80 %, de préférence supérieure à 85 % et de préférence encore de 85% à 91 %.

8. Panneau-allège selon l'une quelconque des revendications précédentes, dans lequel les moyens de réduction de transmission de la lumière sont tels que le panneau-allège a une transmittance de la lumière visible calculée selon BS EN410 de moins de 5 % et de préférence comprise entre 0 % et 3 %.

9. Panneau-allège selon l'une quelconque des revendications précédentes, dans lequel le revêtement couvre toute la surface principale de la première couche de matériau de vitrage.
